# EUROPÄISCHE PATENTANMELDUNG

(11) **EP 0 721 830 A2**
(43) Veröffentlichungstag der Anmeldung: **17.07.1996**
(21) Anmeldenummer: 96100219.3
(22) Anmeldetag: 09.01.1996
(51) Int. Cl.: B29C 44/58

(54) **Vorrichtung und Verfahren zur Herstellung von Formteilen aus geschäumtem Kunststoff**

(30) Priorität: 11.01.1995 DE 19500601
(71) Anmelder: SPEEDform GmbH, 89231 Neu Ulm (DE); A. Handtmann MG GmbH & Co., 88400 Biberach (DE)
(72) Erfinder: Allgeier, Erich, D-88400 Biberach (DE); Regusewitz, Franz, D-88400 Biberach (DE); Notar, Walter, D-89264 Weissenhorn (DE)

(57) **Zusammenfassung**

Bei einem Verfahren zur Herstellung von Formteilen aus geschäumtem Kunststoff, bei dem eine Kunststofform mit dem zu schäumenden Kunststoff befüllt, evakuiert und anschließend mit erhitztem Wasserdampf beaufschlagt wird, wird als Kunststofform eine Silikonform verwendet und diese sowohl während des Evakuierens als auch während der Beaufschlagung mit erhitztem Wasserdampf mit ihrer Außenseite dem vorherrschenden Innendruck ausgesetzt.

## Beschreibung

Die Erfindung geht aus von einem Verfahren und einer Vorrichtung zur Herstellung von Formteilen aus geschäumtem Kunststoff nach dem Oberbegriff des 1. bzw. 8. Anspruchs.

Formteile aus geschäumtem Kunststoff werden heute verwendet um mit dem sogenannten Lost-Foam-Verfahren metallische Modelle herzustellen. Die geschäumten Kunststoffmodelle werden hierzu in größerer Anzahl mit einem herkömmlichen Formwerkzeug produziert.

In der DE-PS 3629885 ist beispielsweise eine entsprechende Vorrichtung beschrieben. Es hat sich jedoch herausgestellt, daß die Formwerkzeuge nach herkömmlichen Methoden hergestellt werden müssen und somit der preiswerten Erstellung von Metallmodellen entgegenstehen.

Es war daher die Aufgabe der Erfindung ein Verfahren und eine Vorrichtung zu schaffen, die mit preiswert herzustellenden Formwerkzeugen auskommen und somit äußerst günstig zu produzierende Metallmodell gewährleisten.

Gelöst wird die Aufgabe durch ein Verfahren mit den kennzeichnenden Merkmalen von Anspruch 1 und eine Vorrichtung mit den kennzeichnenden Merkmalen von Anspruch 7. Durch die Beaufschlagung der Außenseite des Formwerkzeugs mit einem Druck, der dem jeweiligen Innendruck entspricht, muß keine druckfeste Form aus hartem Material, sondem es kann eine weiche Silikonform verwendet werden. Silikonformen lassen sich auf einfache Weise durch Abgießen eines Urmodells herstellen. Hierzu ist kein aufwendiger Formenbau notwendig.

Um den Außendruck der Form entsprechend steuem zu können, wird die Silikonform in vorteilhafter Weise in eine druckfeste Kammer eingebracht. Diese Kammer kann dann mit der gleichen Wasserdampf- oder Vakuumquelle wie die Form selbst über Ventile verbunden werden. Die Ventile sind genauso anzusteuem wie die Ventile, die die Silikonform mit der Wasserdampf- oder Vakuumquelle verbinden.

Um ein Eindringen des Wasserdampfs in alle Teile der Form zu gewährleisten kann die Form mit der Vakuumquelle verbunden bleiben, während sie bereits von anderer Seite mit Wasserdampf beaufschlagt wird.

Wenn das Beschicken mit Wasserdampf oder das Evakuieren über eine offene Verbindung zu der druckfesten Kammer erfolgt, können gesteuerte Ventile eingespart werden. Auf diese Weise wird es möglich, daß die Wasserdampfzufuhr lediglich zu der druckfesten Kammer geregelt wird und dieser Wasserdampf mit gleichem Druck durch eine Öffnung im Formwerkzeug in diesem anliegt. Die gleiche Möglichkeit ist für das Anlegen des Vakuums an der Form gegeben. In beiden Fällen muß jedoch die jeweils andere Verbindung des Formwerkzeuges mit der Wasserdampf- oder Vakuumquelle direkt steuerbar sein, wenn ein Spülen der Form gewährleistet werden soll.

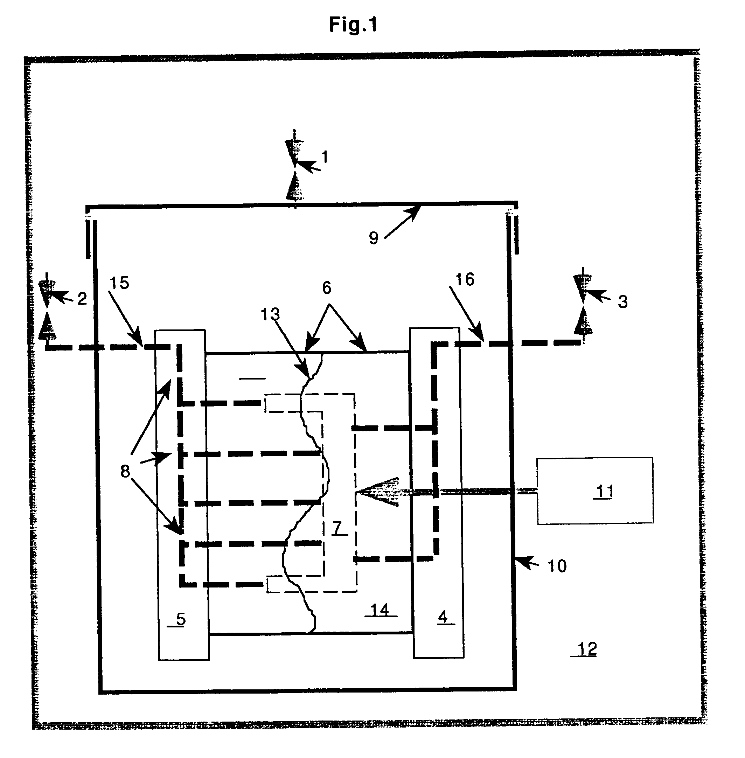

Weitere Einzelheiten und Vorteile der Erfindung ergeben sich aus den Unteransprüchen und werden durch die Zeichnung anhand eines Ausführungsbeispiels eingehend erläutert.

Die einzige Figur zeigt eine schematische Darstellung einer entsprechenden Vorrichtung mit dem Formwerkzeug, der druckfesten Kammer und den Anschlüssen zur Wasserdampf- bzw. Vakuumquelle.

Das Formwerkzeug 6, welches aus Silikon abgegossen wurde, befindet sich zwischen zwei Verteilerplatten 4, 5. Die Form 6 ist zur Entnahme des Formlings an der Linie 13 zu trennen. In die Formhälften sind Be- und Entgasungsleitungen 8, die mit den Be- und Entgasungsleitungen in den Verteilem 4, 5 in Verbindung stehen, eingearbeitet. Die Formhälfte 14 ist ebenfalls über den Verteiler 4 mit einer Fülldüse 11 verbunden. Die Leitungen im Verteiler 5 sind über die weitere Leitung 15 und das Ventil 2 mit einer nicht gezeigten Wasserdampfquelle verbunden. Dagegen ist der Verteiler 4 über die Leitung 16 und das Ventil 3 an die ebenfalls nicht gezeigte Vakuumquelle angeschlossen. Der Deckel 9 eines Druckgefäßes 10 (druckfeste Kammer) ist mit dem Ventil versehen, welches entweder mit der Wasserdampf- oder der Vakuumquelle verbunden ist.

Bevorzugt steht das Druckgefäß 10 in einer Vakuumkammer 12, die damit als Vakuumquelle fungiert. Im folgenden soll die Funktion der gezeigten Vorrichtung beschrieben werden.

Um ein gutes Befüllen der Form 7 zu gewährleisten werden vor dem Füllvorgang die Ventile 1 und 3 geöffnet um die Form und das Druckgefäß zu evakuieren. Durch das gleichzeitige Öffnen beider Ventile herrschen sowohl innerhalb als auch außerhalb des Silikonwerkzeugs 6 gleiche Druckverhältnisse, so daß ein Zusammendrücken der weichen Silikonform durch den vorherrschenden Außendruck vermieden wird. Bei weiterhin geöffneten Ventilen 1 und 3 wird nun über die Fülldüse 11 vorgeschäumtes Granulat in die Form 7 eingeblasen bis diese gefüllt ist. Dieser Füllvorgang kann ausschließlich durch den Unterdruck in dem Druckgefäß 10 und in der Form 7 zustande kommen. Um jedoch eine sehr hohe Fülldichte erreichen zu können, wird das Granulat vorteilhaft mit Überdruck über die Fülldüse 11 eingeblasen. Durch die Kombination von etwa 1 bar Unterdruck an der Form 7 und etwa 1 bar Überdruck an der Fülldüse 11 steigt die Fülldichte soweit an, daß sich eine ausgezeichnete Oberflächenqualität der fertigen Formlinge gewährleisten läßt.

Zum Absaugen der Luft, die zusammen mit dem Granulat eingebracht wurde, werden die Ventile 1 und 3 noch eine Zeitlang geöffnet gehalten.

Zur Einleitung des Schäumvorganges wird nun das Dampfventil 2 geöffnet. Dieser Spülvorgang kann sehr kurz gehalten werden, da die Form ja bereits evakuiert ist. Nun wird das Ventil 3 geschlossen und das Ventil 1 von der Vakuumquelle getrennt und mit der Wasserdampfquelle verbunden. Das Schließen des Ventils 3 wird dabei so gesteuert, daß der Druck in der Form und im Druckgefäß etwa in gleicher Weise ansteigen. Auf diese Weise läßt sich nun verhindem, daß der in der Form 7 vorherrschende Überdruck das weiche Silikonwerkzeug aufbläht, was zu nicht maßhaltigen Formlingen führen würde. Nach Erreichen des Schäumdruckes werden sowohl das Kammerventil 1 als auch das Dampfventil 2 geschlossen. Bis zum Abschluß des Schäumvorganges wird nun der Druck im Formwerkzeug und in dem Druckgefäß konstant gehalten.

Zum Kühlen wird das Ventil 1 wieder mit der Kammer 12 verbunden und ebenso wie das Ventil 3 geöffnet. Auf diese Weise wird sowohl das Druckgefäß 10 als auch das Silikonwerkzeug 6 und der Formhohlraum 7 evakuiert. Die hierbei von dem verdampfenden Wasser entzogene Wärmeenergie trägt zur Kühlung auf Entformungstemperatur bei.

Bei weiterhin geöffneten Ventilen 1 und 3 wird nun die Vakuumkammer 12 geflutet, so daß sich auch in dem Druckgefäß 10 und in dem Silikonwerkzeug 6 Normaldruck einstellt. Der geschäumte Formling kann nun entnommen werden.

Bei einer zweiten Ausführungsform der hier dargestellten Vorrichtung entfällt sowohl das Ventil 2 als auch die Leitung 15. Die Leitungen 8 im Verteiler 5 sind durch eine Öffnung direkt mit dem Innenraum des Druckgefäßes 10 verbunden. Auf diese Weise herrschen im Druckgefäß und im Silikonwerkzeug immer gleiche Druckverhältnisse, so daß eine genaue Regelung entfallen kann. Zur Einleitung des Schäumvorganges muß folglich nur das Ventil 1 mit der Wasserdampfquelle verbunden
und geöffnet werden.

## Patentansprüche

1. Verfahren zur Herstellung von Formteilen aus geschäumtem Kunststoff bei dem eine Kunststofform mit dem zu schäumenden Kunststoff befüllt, evakuiert und anschließend mit erhitztem Wasserdampf beaufschlagt wird, **dadurch gekennzeichnet**, daß als Kunststofform eine Silikonform verwendet wird und diese sowohl während des Evakuierens als auch während der Beaufschlagung mit erhitztem Wasserdampf mit ihrer Außenseite dem vorherrschenden Innendruck ausgesetzt wird.

2. Verfahren nach Anspruch 1, **dadurch gekennreichnet**, daß die Silikonform in eine druckfeste Kammer eingebracht wird, die sowohl mit Vakuum als auch mit Wasserdampf unter Überdruck beaufschlagt wird.

3. Verfahren nach Anspruch 2, **dadurch gekennzeichnet**, daß die Silikonform durch Abgießen eines Urmodells hergestellt wird.

4. Verfahren nach Anspruch 2, **dadurch gekennzeichnet,** daß mit den Formteilen aus geschäumtem Kunststoff Metallmodelle nach dem Lost-Foam-Verfahren hergestellt werden.

5. Verfahren nach Anspruch 1, **dadurch gekennzeichnet**, daß die Form während der Beaufschlagung mit Wasserdampf weiterhin evakuiert wird.

6. Verfahren nach Anspruch 2, **dadurch gekennzeichnet**, daß das Beschicken mit Wasserdampf und/oder das Evakuieren der Form über eine offene Verbindung zu der druckfesten Kammer erfolgt.

7. Verfahren nach Anspruch 1, **dadurch gekennzeichnet,** daß der zu schäumende Kunststoff sowohl mit Unterdruck in die Kunststofform eingesaugt, als auch mit Überdruck eingeblasen wird.

8. Vorrichtung zur Herstellung von Formteilen aus geschäumtem Kunststoff mit einer Kunststofform, die mit einer Vakuumquelle und einer Quelle für erhitzten Wasserdampf verbunden ist, **dadurch gekennzeichnet**, daß die Form in einer druckfesten Kammer vorgesehen ist und aus Silikon besteht.

9. Vorrichtung nach Anspruch 8, **dadurch gekennzeichnet**, daß die durckfeste Kammer mit der Vakuumquelle und der Quelle für den erhitzten Wasserdampf verbunden ist.

10. Vorrichtung nach Anspruch 9, **dadurch gekennzeichnet,** daß die Form durch eine Öffnung über die druckfeste Kammer mit der Vakuumquelle und/oder mit der Quelle für den erhitzten Wasserdampf verbunden ist.
